(19) **Europäisches Patentamt**
**European Patent Office**
**Office européen des brevets**

(11) **EP 1 480 469 B1**

(12) **EUROPEAN PATENT SPECIFICATION**

(45) Date of publication and mention
of the grant of the patent:
**01.05.2013   Bulletin 2013/18**

(51) Int Cl.:
*G06K 9/38* *(2006.01)*          *H04N 9/75* *(2006.01)*

(21) Application number: **04252972.7**

(22) Date of filing: **20.05.2004**

(54) **Video processing**

Videoverarbeitung

Traitement vidéo

(84) Designated Contracting States:
**DE FR GB**

(30) Priority:   **20.05.2003   GB 0311594**

(43) Date of publication of application:
**24.11.2004   Bulletin 2004/48**

(73) Proprietor: **BRITISH BROADCASTING
CORPORATION
London W1A 1AA (GB)**

(72) Inventors:
  • **Thomas, Graham Alexander
    Uckfield, East Sussex TN223HA (GB)**
  • **Grau, Oliver
    Leatherhead, Surrey KT227HD (GB)**
  • **Debenham, Paul Richard
    Croydon, Surrey CRO 4BY (GB)**
  • **Russel, Richard Thomas
    Orsett, Essex RM16 3DF (GB)**

(74) Representative: **Kazi, Ilya et al
Mathys & Squire LLP
120 Holborn
London EC1N 2SQ (GB)**

(56) References cited:
     **US-A- 5 953 076     US-A1- 2002 186 881**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to video processing, particularly to deriving of a key signal to separate areas of foreground and background.

Chroma keying is a well-known technique in which a background of a particular colour is provided and detected in an image of a scene based on detection of the colour. This can be used to remove the background from the image and overlay another background image.

A problem with chroma-keying is the requirement for a uniform background of a desired colour; this can be achieved in a specialised studio but presents problems when used, for example, outdoors or in a large studio with other objects or backgrounds.

Difference keying is a known technique whereby a reference image of a scene is essentially subtracted from a current image and can be used to remove static backgrounds. However, the technique has hitherto had limited applicability to real situations as, for example, small lighting changes may produce changes in the background which are difficult to distinguish from a foreground object. Also, if the foreground object has areas which are similar in colour/brightness to a background area, those areas of the foreground object may be wrongly identified as background and holes may appear in the image. Some applications of difference keying have been proposed in which an image is modelled as a number of Gaussian mixture models but these may be complex to implement and, as practical techniques, cannot generally be relied upon to produce satisfactory results in typical real-world applications.

Reference is directed, for example, to US 5 953 076 in which the average colour intensity of a synthetic reference image containing at least some of the region to be replaced is compared to the average colour and intensity of the current live broadcast image to determine the difference between the two images. The resulting difference image obtained from processing the current image and the synthetic, reference image determines areas of the intended exertion region within the current image which are obscured by live action. Reference is also directed to US 2002/0186881 which discloses an arrangement in which an images pixels are initially segmented into pixels of the image foreground and background and by comparing the pixels of the image to updated models of background reference pixels. The probability that a pixel is in the background or foreground is defined by considering the initial segmentation of the pixels neighbours and the pixels membership in a pixel structure.

Aspects of the present invention are generally concerned with providing improved techniques for deriving key signals. The present application is defined in Claim 1.

In a first aspect, the invention provides a method of deriving a key signal from a sequence of images comprising foreground and background portions, the method comprising:

determining reference image data corresponding to at least one reference image;
identifying at least one region of foreground in an image based on differences between the image and the reference image;
updating the reference image data in response to differences between successive images and the reference image so that the reference image approximates the successive images; characterised in that updating of reference image data to approximate the successive images for at least one region of the reference image corresponding to said at least one identified region of foreground is suppressed.

This may allow gradual lighting changes to be accommodated without holes appearing in the key signal.

Preferably reference image data for said at least one region of the reference image corresponding to said at least one region of foreground is updated based on an estimate of a change to the background.

Differences may be based on simple pixel values, on RGB value triples or on individual colours or pairs of colours or derivative signals and/or one or more of hue, saturation or brightness and difference keying may be combined with other keying techniques to provide a compound keyer which operates on a number of parameters. This may be provided independently.

A second aspect provides a method of processing an image to fill a region in the image comprising:

(a) selecting a target pixel to consider filling;
(b) defining a test line passing through the target pixel and extending either side of the target pixel a number of pixels corresponding to an aperture size;
(c) selecting pairs of test pixels along the test line separated by a number of pixels corresponding to the aperture size, each test pixel having a value which ranges between a first value and a second value;
(d) selecting a pair value for the pair of test pixels which is the closer of the two test pixel values to the first value;
(e) repeating said selecting steps (c) and (d) for further pairs of test pixels;
(f) selecting a line value for the line of test pixels which is the closest to the second value of all the pair values for the line;
(g) repeating steps (b) to (f) for at least one further test line;

(h) selecting a value for the target pixel which is the closest to the first value of all the line values for the test lines.

Preferably foreground has a high value, preferably a predetermined number, preferably one, for pure foreground and background has a low value, preferably zero for pure background. In this case selecting a value closer to foreground value may comprise selecting a maximum value and selecting a value closer to background may comprise selecting a minimum value. The converse may be used.

A third aspect provides a method of deriving a key signal from a sequence of images comprising foreground and background portions, the method comprising:

determining reference image data corresponding to at least one reference image;
identifying at least one region of shadow in an image
applying a first rule for deriving a key signal in said at least one identified region of shadow and a second rule for deriving a key signal outside said at least one identified region of shadow.

The third aspect may allow key signals to be derived reliably in regions of shadow.

A fourth aspect provides a method of deriving a key signal from a sequence of images comprising foreground and background portions, the method comprising:

determining reference image data corresponding to at least one reference image to be compared to or subtracted from subsequent images, wherein the reference image data includes a plurality of local noise data values for a plurality of regions within the reference image.

A fifth aspect provides a method of deriving a key signal from a sequence of images comprising foreground and background portions, the method comprising:

determining reference image data corresponding to a nominal reference image to be compared to or subtracted from subsequent images, wherein the reference image data is derived from a plurality of incoming reference images and includes a mean value and a measure of variance for each pixel of the nominal reference image.

Further aspects and preferred features may be found in the claims and below.

The invention extends to apparatus, particularly a difference keyer comprising processing means arranged to perform any method.

The invention further provides a computer program or computer program product comprising means for performing a method according to any method herein.

Preferred features of each aspect or of the embodiment may be applied independently or to other aspects unless otherwise stated.

An embodiment of the invention will now be described, by way of example only, with reference to the accompanying drawings in which:-

Fig. 1 illustrates statistics and reference picture data collection;
Fig. 2 illustrates shadow correction in RGB colour space;
Fig. 3 illustrates a threshold transparency window;
Fig. 4 illustrates morphological filter operation;
Fig. 5 illustrates propagation filter operation;
Fig. 6 illustrates an edge detection filter;
Fig. 7 illustrates edge filter operation.

To assist in understanding the invention, a brief overview of difference keying will be given, followed by a detailed description of an embodiment.

The first step in creating a key signal using difference keying is to grab a picture with just the background to act as a reference. This reference is then subtracted from a new frame containing the foreground object. A threshold is then applied to difference output of this process to allow only the foreground object through. However this simplified approach does not take into account any of the noise associated with different parts of the picture, such as camera sensor noise, subtle lighting changes, or small background movements, and makes setting a global threshold a difficult challenge. If the threshold is too high parts of the foreground object will be rejected and if it is too low noise in the background will appear in the key signal. For this reason, many conventional difference keying methods have proved unsatisfactory in practice.

To help solve this problem one feature of the present embodiment is the use of an averaged background reference as well as a statistics model for background noise to help the user set a threshold that is more tailored to local parts of the picture. The averaged background is created from several frames of the background scene and helps reduce the effect of any local movement. Conveniently at least 5 frames are averaged, preferably at least 25 frames, in this embodiment 32 frames are used. The difference, for each pixel of several new frames of background and the average reference are accumulated to generate a value for standard deviation. Since this value is tailored to each pixel it can be used to provide to good indication of the genuine background noise and is used to help set the foreground threshold. A user-defined threshold is then applied in addition to this to provide the overall thresholding for the foreground object detection.

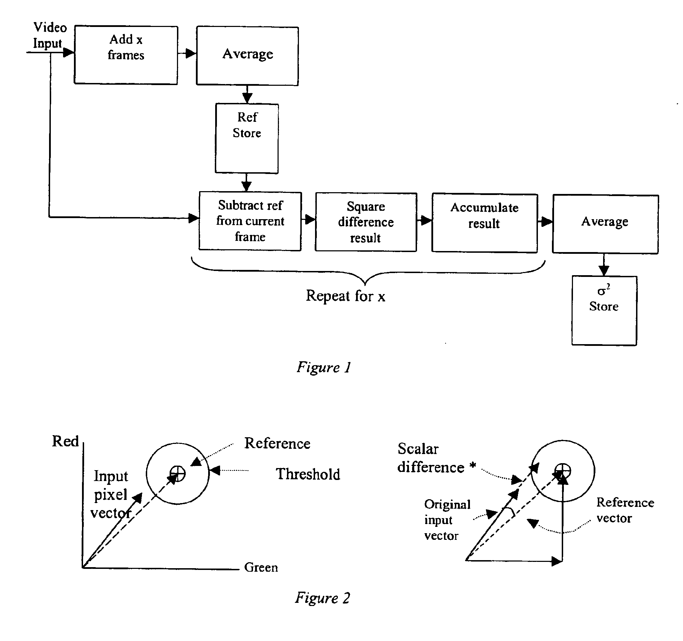

The reference and statistics are generated for the difference keyer in the manner shown in Figure 1.

## Shadow compensation and thresholding

The changes in luminance level of the background scene due to a shadow being cast, would under a basic difference keyer scheme, cause the affected background to show through as a foreground object. This can be undesirable, especially when using the difference keying for object tracking, and a method is disclosed herein to deal with this problem. Since shadows are areas of the picture that have grown darker and in RGB colour space this means that all three components reduce towards zero. Therefore the shadow compensation needs to reject differences where the components have reduced together. This is achieved in the present difference keyer by considering the reference picture and current picture pixel values as vectors, see Figure 2. If the scalar value of the reference is larger than that of the current input, the current input vector is increased in length by the vector representing the unit vector of the input multiplied by the scalar difference between the two vectors. The difference between the vector components of the two is then compared again and the normal foreground threshold is applied.

This means that if the current foreground pixel is darker than the reference value and the current vector is increased by 100% of the difference the final difference value should be zero. This would mean the pixel would be classified as background. However this only works for darker areas of the input frame that have the same hue to that of the reference and so foreground objects that are darker than the background are less likely to be wrongly classified.

To give better control over the amount of shadow correction the scalar difference value is applied is preferably multiplied by a user defined shadow compensation value, alpha, which is a value between 0 and 1. This means a background shadow vector cannot match the value of the reference and as alpha reduces the more likely the compensated vector will fall outside the threshold boundary and be classed as a foreground object.

The step by step method of calculating the shadow corrected input vector is;

1) Calculate modulus of the reference vector, $|Ref| = \sqrt{(R_{REF}^2 + G_{REF}^2 + B_{REF}^2)}$.

2) Calculate modulus of the current input vector, $|Input| = \sqrt{(R_{INPUT}^2 + G_{INPUT}^2 + B_{INPUT}^2)}$.

3) If $|Ref| > |Input|$ i.e. is input darker than ref, calculate, scalar_diff = $|Ref| - |Input|$ else scalar_diff = 0.

4) Calculate input unit vector components and multiply by shadow correction factor and scalar_diff to create a shadow correction vector

$$R_{CORR} = (R_{INPUT} / |Input|) * scalar\_diff * alpha,$$

$$G_{CORR} = (G_{INPUT} / |Input|) * scalar\_diff * alpha,$$

$$B_{CORR} = (B_{INPUT} / |Input|) * scalar\_diff * alpha.$$

5) Add the shadow correction vector to input vector,

$$R_{INPUT}' = R_{INPUT} + R_{CORR},$$

$$G_{INPUT}' = G_{INPUT} + G_{CORR},$$

$$B_{INPUT}' = B_{INPUT} + B_{CORR}.$$

The new shadow corrected input vector can then be tested to see if it falls inside the threshold boundary and so decide if it is to be classed as background or foreground. To do this the new shadow corrected components are subtracted from the reference vector components. The pre-calculated result for standard deviation for that pixel (multiplied by a user-defined value) is then used to divide the result to generate a difference value that is adjusted to attempt to discount background noise. The modulus of the distance difference vector, i.e. the square root of the sum of the squared component differences, can then have the user-defined threshold applied to classify the pixel as foreground or background. This is done as follows,

6)

$$R_{DIFF} = \left| ((R_{REF} - R_{INPUT}') / (R_{STDDEV} * user\_mult)) \right|$$

$$G_{DIFF} = \left| ((G_{REF} - G_{INPUT}') / (G_{STDDEV} * user\_mult)) \right|$$

$$B_{DIFF} = \left| ((B_{REF} - B_{INPUT}') / (B_{STDDEV} * user\_mult)) \right|$$

Where $R_{STDDEV}$ is the calculated standard deviation result from the statistics generation and user_mult is the user specified standard deviation mulitplier.

7)

$$\text{Difference signal} = \sqrt{( R_{DIFF}^2 + G_{DIFF}^2 + B_{DIFF}^2)}$$

In place of RGB difference signals, derivative colour signals may be used and/or parameters such as hue, saturation, brightness and optionally more complex measures such as a measure of texture (e.g. derived from gradient or variation over a number of pixels surrounding a pixel of interest).

**Transparency**

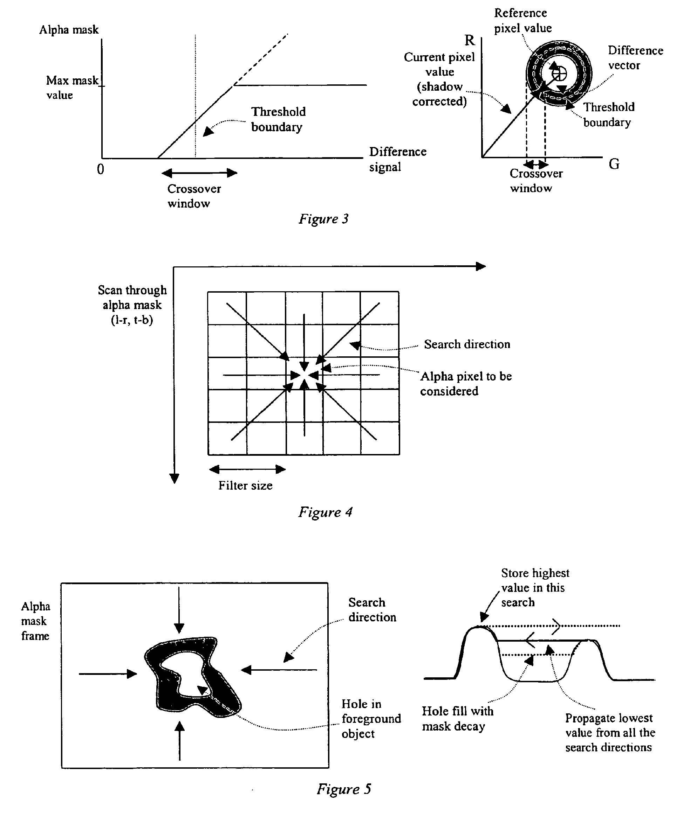

To create a difference keying that can provide similar functionality to that of a conventional chroma-key a method to allow a measure of transparency is important. Smoke and other semitransparent objects are more difficult cope with using difference keying, as the background can be non-uniform in hue and luminance. This non-uniform background means that the difference signal generated by an object of uniform transparency will be non-uniform as some areas of the background will give a better match to the foreground than others. However, with careful use, it should possible to make use of transparent objects and therefore some provision has been built in to the keyer design.
The provision is provided in the form of a crossover window centred on the threshold boundary, whereby a difference signal is turned into an alpha mask signal dependant on the scalar distance from the reference, see Figure 3.
To carry out this window function the difference signal, i.e. the modulus of the difference vector, has a crossover function applied and is then limited to the minimum and maximum allowable alpha output values. This is done with the following function.

```
scaled_key = (diff_signal - (threshold - (crossfade_width /
2))) * scaled_mult
```

Where scaled_mult = max alpha mask value / crossfade_width.
Scaled_mult is then checked to make sure it is within alpha mask output range.
if (scaled_key < 0x0) { output = min_alpha_value}
else if (scaled_key > 0xff) { *maskptr = max_alpha_value }
else { *maskptr = scaled_key }

**Mask Processing**

The difference keyer process works well for foreground and background areas that uniform in colour and brightness but contrast highly with each other. In the typical locations that difference keying may be employed this is unlikely to be the case and any generated key signal is likely to vary in strength across the foreground object as the contrast changes with different objects in the background. This is particularly noticeable with dark foreground and background objects since the differences in hue and luminance are more likely to be small. In the worst case holes in the difference signal can appear in the foreground object where the foreground and background match.
To attempt to reduce this effect, the generated alpha mask is passed through additional filtering to try to fill any holes within a foreground object. Two types of filter have been tested, a basic morphological filter and a filter based on propagating mask values.

**Morphological filter**

The morphological filter design is shown in Figure 4.
The difference keyer morphological filter works by finding the highest value in each search direction and the taking the lowest value of these with which to replace the currently indicated background alpha pixel. The size of the search range can be adjusted to match the size of the hole to be filled. However this is a drawback of the morphological filter, its aperture size is fixed as it processes the frame and so holes that are larger than the aperture size do not get filled. This could be fixed by searching to find the edges of the hole but at the expense of extra computation.

**Propagation filtering**

To try to improve the efficiency and performance of the hole-filling algorithm a novel method based on propagating the mask has been employed. This is illustrated in Figure 5.
The propagation filter scans across the picture in different directions and stores the highest value that it has "seen". In this embodiment, the picture is only scanned in four directions, left-right, right-left, top-bottom, and bottom-top. However, to improve the result the method can be updated to include diagonals. In the first scan direction the propagation filter saves a copy of the current highest value for every pixel in the frame as it moves across the picture. In the following scans, for the other directions, the filter checks this temporary store and if the current highest value for that direction is lower than that stored by the previous passes it overwrites with the new value. Therefore any areas of the picture entirely surrounded by foreground mask pixels will be filled in.
However, this can present a problem, as some foreground objects will correctly have holes within them that should not be filled. The difference keyer can employ any (or none) of at least the following three methods to try to ensure that the propagation filter does not overfill the mask. The first is to limit the distance that the highest mask value is propagated. This can be done by counting the number of non-foreground mask pixels that the highest value is propagated over and when the count gets to a user-defined limit the highest value is reset to that of the current input mask pixel. The second is to use an edge detector to signal the edges of the foreground object to the filter and so stop the propagation. The third method allows the alpha mask to vary slightly, to allow for objects contain varying degrees of transparency, without which the filter will overwrite with the lowest of the highest values of the different scan directions. This is done by including a user-defined value, mask deviation, in the test that looks to find the highest value and allows this value to decay by a small amount.

The method is explained below:-

To find the output value for a given pixel number N and an aperture A consider A+1 pairs of pixels separated by distance A as follows:

$$N\text{-}A \quad N$$

$$N\text{-}A\text{+}1 \quad N\text{+}1$$

$$N\text{-}A\text{+}2 \quad N\text{+}2$$

$$N\text{-}2 \quad N\text{+}A\text{-}2$$

......

$$N\text{-}1 \quad N\text{+}A\text{-}1$$

$$N \quad N\text{+}A$$

Find the minimum value of each of these pairs; the required output value is then the largest of these A+1 minima (or the original value of pixel N, if larger).

A potential problem with this basic method is that this algorithm does not work properly if the 'hole' is closer to the nearest boundary than the specified aperture. Therefore, the method is preferably applied recursively for all aperture values smaller than the one specified.

So if the above algorithm results in a value hf(A) the final wanted output is given by: max (hf(A), hf(A-1), hf(A-2), ..... hf(1))

Done simplistically way this can give a big increase in computational effort, but we have found that it can be considerably simplified and/or reduced to hardware.

A code fragment for the propagation filter can be seen below:-

```
for(all search directions) {
for(all columns(rows)) {

distance_count =0; /* Distance since
highest value recorded */
highest_maskval =0; /* Highest mask value
found in this pass */

for(all pixels in column(row)in scan direction) {
    if (edge > 0) {/* If an edge has been found
    reset */
            distance_count - 0;
            highest_maskval = input_mask;
    }
    else{
            /* If mask input pixel is greater than current
            high value update register. Include option for
            gradual mask decay, i.e. soft object edges */
            if (input_mask >= (highest_maskval - deviation)){
                    highest_maskval = current_maskval;
                    distance_count = 0;
            }
            /* If distance within bounds and current pixel is
            not a foreground object increment distance count
            */
            else if ((distance_count <
```

```
                max_distance)&&(input_mask <= min_thres)){
                        distance_count++;
                }
                /* If propagation has happened to max distance
                reset */
                else if (distance_count >= max_distance){
                        highest_maskval = input_mask;
                }
        }
        /* If stored highest value for current pixel of
                previous scans is greater than current highest
                value store minimum \ current val */

        if (highest_maskval < mask_out) {
                        mask_out = highest_maskval;
            }
    }
    }
    }
```

## The propagation filter edge detector

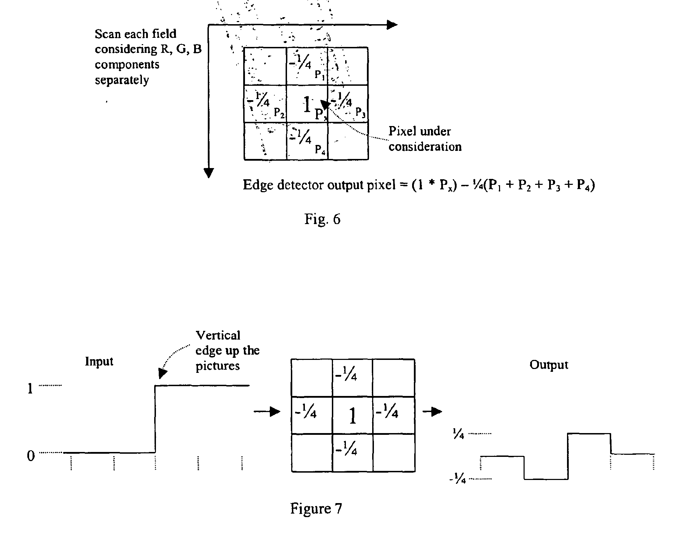

The design of the edge detection filter can been seen with reference to Figure 6.

The edge detection filter scans through each field of video input looking at the difference in value of the current pixel component to that of its neighbours. In flat areas of the picture the output of the filter tends to zero but when an edge is encountered the output goes first negative and then positive, as can be seen in Figure 7.

The output of the filter, for each component, has any negative values removed and to cope with the three output components (RGB) the edge detector simply adds together the individual components. This result is then compared against a user-defined threshold applied to determine if the output is sufficient to be classed as an edge. The design also allows the edge signal to be spread to allow the user to create a region around the edges of objects where the propagation filter should not flood fill with mask but should leave the existing mask value. This can help stop undesired effects from the propagation filter filling regions of the mask that it should not fill.

The spreading of the edge signal is achieved by the use of a 2D running average filter that averages the edge signal out across the desired number of pixels. In this embodiment this is done after the edge filter and before the threshold is applied. The user-defined threshold is then adapted to suit the different edge spreading distances. The edge spread result then has the adapted threshold applied to determine whether individual pixels should be classed as edges. The output of the edge detector is a frame size edge mask made of one component.

## Filter developments

The edge detection filter can be developed further as desired. The propagation filter would be improved if it worked in diagonals. Preferably edge detection should work on actual or gamma corrected input and not that passed through the vibration averaging filter.

## Reference Updating

One of the fundamental flaws with conventional difference keying is that changes in light levels within the background scene typically cause the affected areas to be classed as foreground. One way of trying to solve this limitation is to seek to continually update the background reference so that it better represents the current scene. To achieve this continual updating steps must be taken to ensure that real foreground objects are not included within the reference. We have found that this can be done by applying a lower threshold to the difference signal than that of the main keyer output to give an update reference signal. However we have also found that problems arise in areas like the edges of foreground objects where subtle lighting changes were enough to have an impact on the background reference but were small enough to make setting a realistic threshold very difficult. If the threshold is turned down to cope with this phenomenon the range of values that could be updated became unrepresentative of the actual changes across the picture and the reference began to have less relation to the stored noise statistics. To get round this problem the calculated mask is used but is expanded in size, once again by a user-specified amount, so that the edges of foreground objects are not included in the update.

There are though, two extra conditions to take into account, if shadow correction has been applied the mask will indicate foreground object shadows as background and hence updating will spoil the reference. To overcome this a second mask has been created that does not include any compensation for shadows. Secondly the work done by the mask processing functions such as the propagation filter have been represented in the update decision. However a drawback is that this means applying the mask processing functions to both shadow corrected and non-shadow corrected masks. The results of this processing may not necessarily give the same result in the non-shadow areas since the application of the shadow processing can attenuate the difference signal of actual foreground objects.

To mitigate the effects mentioned, the preferred embodiment creates a basic non-shadow corrected mask that is then expanded, in a similar way to that of the edge mask.

This is then logically combined with the shadowed corrected and processed mask so that any areas indicated as foreground in the basic OR processed mask are not updated in the reference. We have found this to be beneficial.

The updating processes itself relies on an averaging window whereby a weighting ratio is applied to the existing averaged pixel in the store and to the current pixel value. This means that the user can specify how much influence the current pixel value has in changing the averaged value, i.e. the speed of lighting change that can be accommodated by the system. The calculation is

$$\text{New average} = (x/\text{update window}) * \text{current average} + (y/\text{update window}) * \text{current input}.$$

Where x + y = update window width.

The update window being the effective number of frames the reference value is averaged over, preferably at least 5, more preferably at least 25, in this embodiment over hundred, specifically about 128 was a convenient number.

In addition to updating the background reference, an investigation was carried out into updating the statistics for background noise. This can however make the system rather unstable since any value in the current frame that exceeds the foreground threshold is not updated (to ensure foreground objects aren't included). This then means that the spread of sample points for the statistics are forcefully contained with the existing threshold and no longer represent the actual noise. Since the statistics contribute to the setting of the threshold this then creates a feedback loop that gradually decreases the threshold as the range of values the statistics are based on reduces.

One way to get round this problem we have found is to update the statistics over very long periods across the entire picture, foreground objects included. Since foreground objects should move and the update contribution per frame would be small this would create a fairer indication of the noise level. However this makes assumptions about the behaviour of foreground objects and the likely benefits of updating the statistics are small, so statistic updating is less preferred.

## Movement compensation

The difference keyer, as previously mentioned, relies on the background of the current scene not changing in relation to that of the stored reference. This can be a hard condition to adhere to, especially in outdoor environments where the camera may be positioned on a scaffold tower and small movements in the tower will cause a shift of the current picture in respect to that of the reference. This is likely to cause the edges of background objects to appear as foreground objects and so damage the key result.

To reduce the sensitivity of the difference keyer to very small movements a running average filter can be applied to the input picture to soften the edges of background objects (in this embodiment the edge detector derives its input from the picture after running average filter but, as mentioned above, this may be improved by using a more direct input). However this only helps to dampen the effect at the expense of overall performance as the quality of the key edges can become impaired. One way to solve this would be to create a reference panorama of the whole area, combining different shots, to ensure that wherever the camera points the system has a relevant reference. This would require some form of picture matching / motion tracking to generate the appropriate reference picture but would allow free camera movement.

Another solution we have found to this problem is to compensate for the movement of the camera by shifting the reference frame to match the camera motion. The edges of the picture are then ignored when calculating the difference signal. To ensure that reference data is then created for the new areas of the picture the difference keyer should preferably be allowed to update the edge of a picture without any limitation. If the camera movement was slow compared to the update rate of the background the reference could be adapted to suit the current shot. However this would mean that foreground objects would have to be kept within the centre of the frame otherwise a correct mask signal would not be generated.

## Summary of overall method

For ease of understanding, the steps of an overall method will again be summarised. Each feature may be provided independently.

· grab at least one image of the background, more preferably a sequence of images, so that a "mean" and "standard deviation" image can be generated
· for each new image, compute difference (e.g. in RGB space, but chrominance and luminance etc may be used) between new and reference image.
- In a simplest embodiment, take the magnitude of this difference vector, apply lift and gain to generate a key

Refinements include:

· compensate for noise level at each pixel, e.g. by attenuating any difference component below, a predetermined number, preferably 3, standard deviations

· apply a different gain law when the image change corresponds to that of a shadow. This may be detected if a region of the current image has r, g, b all reduced by the same proportion, or the r,g,b value has moved towards a colour defined by some a priori knowledge of what colour or brightness a shadow should be, e.g by specifying what fraction of r, g, b are likely to be 'shadowed out' by an object.

· Apply some morphological filtering operation to the resulting key signal, e.g. to fill in holes in an object, remove isolated pixels, etc.

· To use this signal for a chroma-keying-like application, it can be used to control the usual processes in a keyer, with suitable modifications.

- In a chroma keyer, it is known to remove the background by a process known as background subtraction (or a similar process called hue suppression in a YUV-based keyer), where the incoming image has subtracted from it the defined key colour multiplied by a scaled version of the key signal, with the result being clipped to black. In the present application, the stored reference image may be multiplied by the key signal, and then subtracted. The key signal can then be used to control a mix between foreground and background to be inserted. This allows shadow areas, where the key signal might be, say, 0.5, to appear as a dimmed version of the new background image, as the foreground image in such areas is set to black by the background subtraction process (as long as scaling applied to key is >2).

· To cope with lighting changes over time in the background, the background image can be updated using a low-pass temporal filter, e.g. new_background = 0.95 * old_background + 0.05*new_image, but this cannot be applied where an object is present. Preferably the "covered" portion of the background is scaled by the same amount as the average brightness change in the background that can be seen, so that it can be corrected for effects due to global lighting changes. This can be extended by e.g. only considering small regions around each portion of covered background.

Each feature disclosed herein may be independently provided unless otherwise stated.

## Claims

1. A method of deriving a key signal from a sequence of images comprising foreground and background portions, the method comprising:

    determining reference image data corresponding to at least one reference image;
    identifying at least one region of foreground in an image based on differences between the image and the reference image;
    updating the reference image data in response to differences between successive images and the reference image so that the reference image approximates the successive images; **characterised in that**:

        updating of reference image data to approximate the successive images for at least one region of the reference image corresponding to said at least one identified region of foreground is suppressed.

2. A method according to Claim 1 wherein reference image data for said at least one region of the reference image corresponding to said at least one region of foreground is updated based on an estimate of a change to the background.

3. A method according to Claim 1 or 2 wherein differences are calculated based on at least one of RGB pixel values, hue, saturation, brightness, and a measure of texture.

4. A method according to any preceding claim further comprising generating a key image identifying regions of foreground and background.

5. A method according to Claim 4 further comprising processing the key image to fill holes in at least one of the foreground or background regions.

6. A difference keyer comprising processing means arranged to perform a method according to any preceding claim.

7. A computer program or computer program product comprising instructions for performing a method according to any of Claims 1 to 5.

**Patentansprüche**

1. Verfahren zum Ableiten eines Schlüsselsignals aus einer Folge von Vordergrund- und Hintergrundabschnitte umfassenden Bildern, umfassend:

Bestimmen von mindestens einem Referenzbild entsprechenden Referenzbilddaten;
Identifizieren mindestens einer Vordergrundregion in einem Bild auf Basis von auf Unterschieden zwischen dem Bild und dem Referenzbild;
Aktualisieren der Referenzbilddaten in Antwort auf Unterschiede zwischen aufeinanderfolgenden Bildern und dem Referenzbild, um das Referenzbild an die aufeinanderfolgenden Bilder anzugleichen,
**dadurch gekennzeichnet, dass**
das Aktualisieren der Referenzbilddaten betreffend das Angleichen der aufeinanderfolgenden Bilder für die mindestens eine Region des Referenzbildes, die der mindestens einen identifizierten Vordergrundregion entspricht, unterdrückt wird.

2. Verfahren nach Anspruch 1, wobei die Referenzbilddaten für die mindestens eine Region des Referenzbildes, die der mindestens einen Vordergrundregion entspricht, aufgrund einer geschätzten Änderung des Hintergrundes aktualisiert werden.

3. Verfahren nach Anspruch 1 oder 2, wobei die Berechnung von Differenzen aufgrund mindestens der RGB-Pixelwerte, des Farbtons, der Sättigung, der Helligkeit und/oder des Strukturmaßstabs erfolgt.

4. Verfahren nach einem der vorhergehenden Ansprüche, umfassend das Erzeugen eines die Vordergrund- und Hintergrundregionen identifizierenden Schlüsselbildes.

5. Verfahren nach Anspruch 4, ferner umfassend das Verarbeiten des Schlüsselbildes, um Löcher in der Vordergrund- und/oder der Hintergrundregion zu füllen.

6. Unterschieds-Schlüssel, umfassend Verarbeitungsmittel, die eingerichtet sind, ein Verfahren nach einem der vorhergehenden Ansprüche durchzuführen.

7. Computerprogramm oder Computerprogrammprodukt, umfassend Anweisungen zum Durchführen eines Verfahrens nach einem der Ansprüche 1 - 5.

**Revendications**

1. Procédé permettant de dériver un signal d'incrustation à partir d'une séquence d'images comportant des parties de premier plan et de second plan, le procédé comportant :

l'étape consistant à déterminer des données d'image de référence correspondant à au moins une image de référence ;

l'étape consistant à identifier au moins une région de premier plan dans une image en fonction des différences entre l'image et l'image de référence ;

l'étape consistant à mettre à jour les données d'image de référence en réponse aux différences entre les images successives et l'image de référence de sorte que l'image de référence se rapproche des images successives ; **caractérisé en ce que** :

l'étape consistant à mettre à jour les données d'image de référence à des fins de rapprochement avec les images successives pour au moins une région de l'image de référence correspondant à ladite au moins une région identifiée du premier plan est supprimée.

2. Procédé selon la revendication 1, dans lequel les données d'image de référence pour ladite au moins une région de l'image de référence correspondant à ladite au moins une région de premier plan sont mises à jour en fonction d'une estimation d'un changement au niveau du second plan.

3. Procédé selon la revendication 1 ou la revendication 2, dans lequel les différences sont calculées en fonction d'au moins l'une parmi les valeurs de pixel RVB, la teinte, la saturation, la luminance, et une mesure de texture.

4. Procédé selon l'une quelconque des revendications précédentes, comportant par ailleurs l'étape consistant à générer une image d'incrustation identifiant des régions de premier plan et de second plan.

5. Procédé selon la revendication 4, comportant par ailleurs l'étape consistant à traiter l'image d'incrustation pour remplir des trous dans au moins l'une des régions de premier plan ou de second plan.

6. Incrustateur de différence comportant des moyens de traitement arrangés pour effectuer un procédé selon l'une quelconque des revendications précédentes.

7. Programme informatique ou produit de programme informatique comportant des instructions pour effectuer un procédé selon l'une quelconque des revendications 1 à 5.

Figure 1

Figure 2

Alpha mask

Max mask value

Threshold boundary

0

Difference signal

Crossover window

R

Reference pixel value

Current pixel value (shadow corrected)

Difference vector

Threshold boundary

Crossover window

G

*Figure 3*

Scan through alpha mask (l-r, t-b)

Search direction

Alpha pixel to be considered

Filter size

*Figure 4*

Alpha mask frame

Search direction

Hole in foreground object

Store highest value in this search

Hole fill with mask decay

Propagate lowest value from all the search directions

*Figure 5*

Scan each field
considering R, G, B
components
separately

Pixel under
consideration

Edge detector output pixel = $(1 * P_x) - \frac{1}{4}(P_1 + P_2 + P_3 + P_4)$

Fig. 6

Input

Vertical
edge up the
pictures

Output

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5953076 A

- US 20020186881 A